# EUROPEAN PATENT APPLICATION

(11) **EP 0 721 101 A2**
(43) Date of publication of application: **10.07.1996**
(21) Application number: 96100210.2
(22) Date of filing: 09.01.1996
(51) Int. Cl.: G01N 21/17

(54) **Method and apparatus for identifying and characterizing a material**

(30) Priority: 09.01.1995 US 369952
(71) Applicant: TEXAS INSTRUMENTS INCORPORATED, Dallas Texas 75265 (US)
(72) Inventor: Douglas, Monte A., Coppell, TX 75019 (US); Duncan, Walter M., Dallas, TX 75238 (US); Files, Leigh Ann, Dallas, TX 75240 (US)
(74) Representative: Schwepfinger, Karl-Heinz, Dipl.-Ing.

(57) **Abstract**

Photothermal effects of a material (10) may be detected and analyzed in order to identify and characterize the material (10). The material (10) is illuminated by a light (32) from a light source (34). The material (10) absorbs the light (32), causing an increase in temperature and size of the material (10). An atomic force probe tip (30) detects the increase in temperature and size of the material (10) in order to determine characteristic properties of the material (10). The characteristic properties of the material (10) are used in identifying the nature of the material (10).

## Description

### TECHNICAL FIELD OF THE INVENTION

The present invention relates in general to materials characterization and contamination control and particularly to a method and apparatus for identifying and characterizing a material on a nanometer scale.

### BACKGROUND OF THE INVENTION

Atomic force and scanning tunneling microscopies are typically used to characterize the surface structure of a material. These microscopies conventionally are used to characterize static surface topography and surface material properties on a lateral nanometer scale. A probe tip is used in close proximity to the surface of the material in order to analyze the surface features through various probe tip/surface interactions. However, these microscopies only define the nature of the static surface of the material. Material identification and characterization is difficult to perform based merely on the surface topography of the unknown material. Therefore, it is desirable to be able to analyze and detect information besides surface topography in order to identify and characterize an unknown material.

### SUMMARY OF THE INVENTION

From the foregoing, it may be appreciated that a need has arisen for the identification and characterization of unknown materials on a nanometer scale. A need has also arisen for the detection of dynamic effects on the material in order to interrogate and determine the nature of the material.

In accordance with the present invention, a method and apparatus for identifying and characterizing a material on a nanometer scale are provided that substantially eliminate or reduce disadvantages and problems associated with conventional surface topography approaches.

According to an embodiment of the present invention, there is provided a method of identifying and characterizing a material on a nanometer scale that includes illuminating the material and detecting photothermal effects exhibited by the material in response to the illumination. The photothermal effects exhibited by the material are analyzed in order to determine the identity and characteristic properties of the material.

The present invention provides various technical advantages over conventional surface topography approaches. For example, one technical advantage is in detecting dynamic changes to the material due to light absorption. Another technical advantage is in performing subsurface mapping of the material. Yet another technical advantage is in being able to identify and characterize an unknown material on a nanometer scale. Other technical advantages are readily apparent to one skilled in the art from the following figures, descriptions, and claims.

### BRIEF DESCRIPTION OF THE DRAWINGS

For a more complete understanding of the present invention and the advantages thereof, reference is now made to the following description taken in conjunction with the accompanying drawings, wherein like reference numerals represent like parts, in which:
FIGURE 1 illustrates a block diagram of the generation of photothermal effects in materials;
FIGURE 2 illustrates a diagram of a method of detecting photothermal effects in identifying an unknown material; and FIGURE 3 illustrates a diagram of a method of detecting photothermal effects for performing a subsurface characterization of the material.

### DETAILED DESCRIPTION OF THE INVENTION

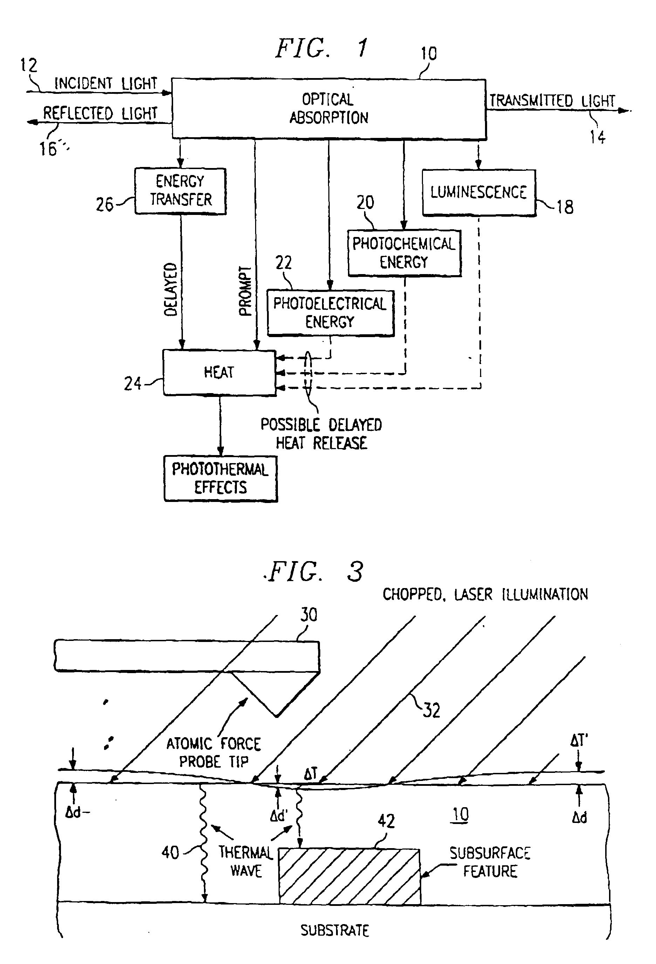

FIGURE 1 is a block diagram showing the generation of photothermal effects in a material 10. Material 10 receives an incident light 12 from a laser or other illuminating source. Incident light 12 may affect material 10 in three different ways. A portion of incident light 12 may pass through material 10 as transmitted light 14. A portion of incident light 12 may return from material 10 as reflected light 16. A portion of incident light 12 may be absorbed by material 10. The absorption of incident light 12 by material 10 can result in the production of several forms of energy. These forms of energy include luminescence 18, photochemical energy 20, photoelectrical energy 22, and heat 24. Heat can be produced promptly or by delays due to an energy transfer mechanism 26. Heat 24 may also occur as a result of the other forms of energy (luminescence 18, photochemical energy 20, and photoelectrical energy 22) through a delayed heat release.

All the resulting energy forms add up to equal the optical energy within material 10 through absorption of incident light 12. The electromagnetic energy of incident light 12 may be in the optical range as well as in other ranges including x-ray, ultraviolet, infrared, microwave, and radio frequency radiation. The resulting energy forms due to the absorption of optical energy within material 10 leads to a variety of detectable photothermal effects of material 10. A photothermal effect is a change in material properties that results from illuminating the material with electromagnetic energy. Photothermal effects include a temperature rise, a pressure change, a change in thermal or acoustic refractive index, thermal or acoustic surface deformation, thermal emission change, and reflectivity/absorptivity change. These changes can manifest within material 10 or within a coupling fluid in contact with material 10.

Photothermal effects of material 10 may be monitored by methods used in atomic force and scanning tunneling microscopies on a lateral nanometer scale spatial resolution basis. Surface analysis methods of the microscopies are used to detect dynamic variations emanating from material 10 associated with the photothermal effects. The nanometer scale detection ability of atomic force and scanning tunneling microscopies also provide force feedback modes that include direct force feedback on contact, dampening of tip resonant oscillation frequency upon surface approach, and an increase in light intensity from a near field optical illuminating fiber upon surface approach. A probe tip is used to interact with material 10 to provide surface analysis techniques that include lateral and modulated force, magnetic force, electrical potential, electrochemical potential, capacitance, magnetic resonance, temperature, reflectance, polarization, and other developing probe tip-material interactions.

Material properties can be interrogated on a nanometer scale using information associated with any given photothermal effect. Interrogations may include spectroscopic infrared characterization of submicron particles by probing increases in the particle size along the Z axis associated with temperature increases when the particle absorbs electromagnetic energy. Another interrogation approach involves monitoring thermal waves that propagate below a substrate surface, deforming the surface and altering the refractive index reflectivity in accordance with subsurface structures that change the nature of the thermal waves in order to obtain a subsurface image of the physical structure of submicron particles.

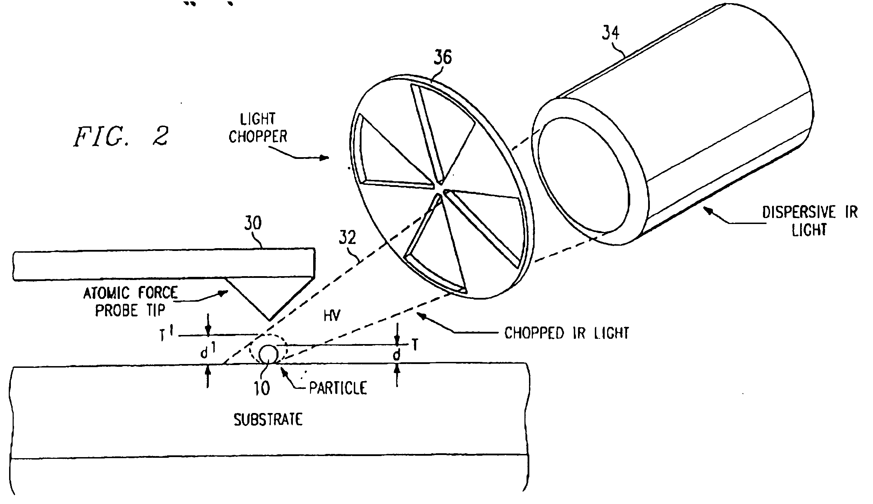

FIGURE 2 shows a specific interrogation example for detecting changes in temperature and size of material 10. An atomic force probe tip 30 is positioned over material 10 that is illuminated by light 32 from a light source 34. Light 32 from light source 34 passes through a light chopper 36 prior to illuminating material 10. Light chopper 36 modulates light 32 to enhance sensitivity and detection of photothermal effects on material 10. A feedback loop of atomic force probe tip 30 is synchronized to the modulation frequency and phase of light chopper 36 through a phase sensitive or lock-in amplifier. The feedback loop of atomic force probe tip 30 can be any of the Z axis force feedback modes described above, such as an increase in the near field light intensity to offer exponential position sensitivity.

Light source 34 may generate infrared light for light 32 and adjust the wavelength from the far to the near end of the infrared domain. When material 10 absorbs a particular wavelength of light 32, the temperature of material 10 will increase from T to Tᵢ in accordance with characteristic resonant frequencies of absorption peculiar to the molecular composition of material 10. The rise in temperature is related to the specific heat value of material 10 since the absorbed light 32 is converted to heat within the constituent molecular species to cause the photothermal effects of material 10.

The increase in temperature is associated with an increase in the size of material 10 from d to dᵢ in accordance with the coefficient of linear expansion of material 10. The amount of size increase of material 10 depends upon such factors as the mode absorptivity, light intensity for a given resolution, area of illumination, material specific heat, material linear coefficient of expansion, modulation frequency, internal conversion, and thermal coupling to underlying substrate. Atomic force probe tip 30 detects the increase in temperature and the expansion of material 10 along the Z axis normal to the substrate surface. Atomic force probe tip 30 associates the temperature change and expansion of material 10 with a particular wavelength of light 32 absorbed by material 10. In this manner, an infrared spectrum of material 10 is acquired showing the physical displacement normal to the substrate surface plotted as a function of infrared wavelength.

Instead of using a scanning infrared light 32 from a light dispersive element as described above, infrared light from a Michelson interferometer may be used. For this setup, the probe tip signal intensity interferogram can be transformed from a time to an energy domain to generate the infrared spectrum. Additionally, interrogation may be performed at room temperature and at atmospheric pressure in contrast to high vacuum analytical methods that remove volatile compounds prior to analysis.

FIGURE 3 shows a method of determining a subsurface image of material 10. Material 10 is illuminated by a focused energy source, such as a laser, that produces a modulated single wavelength light 32. Upon illumination, thermal waves 40 are generated within material 10. The nature of thermal waves 40 are altered by features 42 underlying the surface of material 10. The properties of thermal waves 40 are interrogated by atomic force probe tip 30, using the Z axis feedback mode to monitor surface deformation or by a probe tip-surface interaction such as a change in reflectivity, absorptivity, refractive index, temperature, or thermal emission. Through monitoring of thermal waves 40, atomic force probe tip 30 can effectively map out the subsurface structure of material 10.

The ability to identify an unknown material 10 has several useful applications. These applications include semiconductor fabrication techniques. Identification and characterization of materials will lead to successful fabrication of next generation components with high yield, reliability, performance, and quicker market introduction. The source and type of contamination that may occur during semiconductor fabrication can be established and eliminated through identification and characterization of unknown particles entering the fabrication process.

In summary, an unknown material may be identified and characterized by illuminating the material and detecting and analyzing the photothermal effects exhibited by the material. Material properties may be characterized on a nanometer lateral spatial scale by examination of a multitude of photothermal effects by a variety of feedback and probe tip-surface interactions associated with atomic force and scanning tunneling microscopies.

Thus, it is apparent that there has been provided, in accordance with the present invention, a method and apparatus of identifying and characterizing a material on a nanometer scale that satisfies the advantages set forth above. Although the preferred embodiment has been described in detail, it should be understood that various changes, substitutions, and alterations can be made herein. For example, though specific material properties were described, other material properties may be characterized by examination of a multitude of photothermal effects for identification and characterization of unknown materials. Also, other specific interrogation techniques other than those described above may be used in detecting other photothermal effects in order to identify and characterize an unknown material. Other examples are readily ascertainable by one skilled in the art without departing from the spirit and scope of the present invention as defined by the following claims.

## Claims

1. A method of identifying and characterizing a material on a nanometer scale, comprising the steps of:
illuminating the material;
detecting photothermal effects exhibited by the material;
analyzing the photothermal effects to determine the identity and characteristic properties of the material.

2. The method of Claim 1, wherein said illuminating step includes modulating electromagnetic energy illuminated on the material.

3. The method of Claim 1, wherein said detecting step is performed through atomic force microscopy.

4. The method of Claim 1, wherein said illuminating step includes subjecting the material to infrared light.

5. The method of Claim 4, further comprising the step of:
passing the infrared light through a light chopper.

6. The method of Claim 1, wherein said detecting step includes measuring a change in size of the material.

7. The method of Claim 1, wherein said detecting step includes measuring a change in temperature of the material.

8. The method of Claim 1, wherein said detecting step includes monitoring thermal waves within the material to obtain a subsurface structural image of the material.

9. The method of Claim 1, wherein said illuminating step includes changing a wavelength of light illuminated on the particle.

10. The method of Claim 1, further comprising the step of:
placing the material in contact with a coupling fluid, said detecting step including detecting photothermal effects exhibited by the coupling fluid.

11. The method of Claim 1, wherein the material is interrogated at room temperature.

12. The method of Claim 1, wherein the material is interrogated at atmospheric pressure.

13. An apparatus for identifying and characterizing a material on a nanometer scale, comprising:
an illuminating source operable to illuminate the material with electromagnetic energy;
a monitor operable to detect photothermal effects of the material in response to said electromagnetic energy on a lateral nanometer scale spatial resolution basis.

14. The apparatus of Claim 13, further comprising:
a light chopper operable to modulate said electromagnetic energy from said illuminating source.

15. The apparatus of Claim 13, wherein said illuminating source varies a wavelength of said electromagnetic energy.

16. The apparatus of Claim 15, wherein said monitor produces an infrared spectrum of the material in response to different wavelengths of electromagnetic energy absorbed by the material.

17. The apparatus of Claim 13, wherein said monitor includes an atomic force probe tip.

18. The apparatus of Claim 13, wherein said illuminating source generates single wavelength electromagnetic energy to induce thermal waves in the material, said monitor analyzing said thermal waves to produce a subsurface map of the material.

19. The apparatus of Claim 13, wherein said illuminating source includes a Michelson interferometer operable to generate infrared light.
